# EUROPEAN PATENT SPECIFICATION

(11) **EP 2 642 187 B1**
(45) Date of publication and mention of the grant of the patent: **13.05.2015**
(21) Application number: 13001284.2
(22) Date of filing: 14.03.2013
(51) Int. Cl.: G03H 1/30, F21V 14/00, G02B 5/32, F21Y 101/02, G03H 1/22, G03H 1/04, F21S 8/10, F21V 5/00, G03H 1/00, F21V 9/16

(54) **Lighting optical system comprising a holographic liquid crystal element**
Optisches Beleuchtungssystem mit einem holographische Flüssigkristall-Element
Système optique d'éclairage avec un élément holographique à cristaux liquides

(30) Priority: 21.03.2012 JP 2012063915
(43) Date of publication of application: 25.09.2013
(73) Proprietor: Stanley Electric Co., Ltd., Meguro-ku Tokyo 153 (JP)
(72) Inventor: Toko, Yasuo, Tokyo, 153-8636 (JP); Okamoto, Hidefumi, Tokyo, 153-8636 (JP)
(74) Representative: Wagner, Karl H.

(56) References cited:
- EP-A1- 0 738 903
- EP-A2- 2 492 579
- WO-A1-91/10926
- WO-A1-2010/058323
- JP-A- 2012 146 621
- US-A1- 2006 039 160
- US-A1- 2010 085 276

## Description

### Technical Field

The present invention relates to lighting optical systems, and in particular, to a lighting optical system for a vehicle such as an automobile or the like.

### Background Art

Conventional lighting optical systems for use in a vehicular headlamp have been known to utilize a noncoherent system light source such as a halogen lamp, a high intensity discharge (HID) lamp, a light emitting diode (LED), and the like. Such optical systems for use in a vehicular headlamp are required to be capable of forming a high-beam light distribution pattern, a low-beam light distribution pattern, and the like. The conventional lighting optical system for a vehicular headlamp can form a light distribution pattern by means of a reflector arranged around the light source, and the like to reflect the same toward a projector lens arranged in front thereof, thereby projecting the light distribution pattern forward while inverting the same. This type of lighting optical unit can be found, for example, in Japanese Patent Application Laid-Open No. 2008-152980.

Another lighting optical system for a vehicular headlamp can be seen in, for example, Japanese Patent Application Laid-Open No. Hei. 05-139203, in which a holographic liquid crystal element is arranged in front of a projector lens so that the illumination area by the headlamp is expanded by refraction to form a desired light distribution pattern.

In the former case, a light distribution control mechanism utilizing a motor, and the like mechanism should be incorporated therein. When doing so, the lighting optical system incorporating such a mechanism for forming various required light distribution patterns is difficult to be miniaturized. Furthermore, it is difficult to suppress the production costs.

In the technology in which the illumination area is expanded by means of a holographic liquid crystal element, the switching operation cannot be achieved by an electrical means, but a switching mechanism (mechanical means) for switching a normal state (not expanded) and an expanded state should be provided. Therefore, also in this case, the lighting optical system for a vehicular headlamp is difficult to be miniaturized. Furthermore, it is difficult to suppress the production costs.

WO 2010/058323 A1 discloses a vehicle headlamp comprising a laser light source, a controllable and programmable holographic device, a wavelength converter screen-like member emitting visible light and a lens configured to project the visible light beams from the wavelength comverter.

US 2010/0085276 A1 discloses holographic projection module comprising a controllable and programmable holographic liquid crystal spatial light modulator. This holographic spatial light modulator is configured to convert the light of a laser light source to form a hologram in accordance with a computer generated data.

### Summary

The present invention was devised in view of these and other problems and features in association with the conventional art. According to an aspect of the present invention, a lighting optical system can be not mechanically but electrically controlled in light distribution while the miniaturization of the optical system can be achieved with suppressed production costs.

According to another aspect of the present invention, a lighting optical system can include: a light source configured to emit light beams; a holographic liquid crystal element configured to convert the light beams emitted from the light source to regeneration light beams forming a prescribed light distribution pattern or alternatively allow the light beams to pass therethrough as they are, in accordance with a voltage applied thereto; a wavelength converter configured to include a wavelength converting material which can be excited by the regeneration light beams from the holographic liquid crystal element and emit visible light beams; and a lens configured to project the visible light beams from the wavelength converter.

Herein, the wavelength converter can be a wavelength converting plate, or a phosphor plate including a phosphor as an example of the wavelength converting materials.

In the above lighting optical system, the holographic liquid crystal element can include a plurality of pixels separately applied with a voltage, and the plurality of pixels can convert the light beams emitted from the light source to regeneration light beams having different light distribution shapes in accordance with the applied voltage, respectively.

Furthermore, the lighting optical system with the above configuration can further include a reflecting member configured to reflect the light beams passing through the holographic liquid crystal element without any conversion so that the light beams is allowed to be incident on the wavelength converter.

Furthermore, in the lighting optical system with the above configuration, the light beams emitted from the light source can have a center wavelength of 450 nm or shorter, and the wavelength converter can absorb light beams at a wavelength range of from ultraviolet to blue light.

Furthermore, in the lighting optical system with the above configuration, the phosphor is included in the wavelength converter so that the phosphor is distributed therein in accordance with a luminance distribution of the regeneration light beams in terms of any one of its density of the phosphor contained in the wavelength converter and a thickness of the wavelength converter.

### Brief Description of Drawings

These and other characteristics, features, and advantages of the present invention will become clear from the following description with reference to the accompanying drawings, wherein:

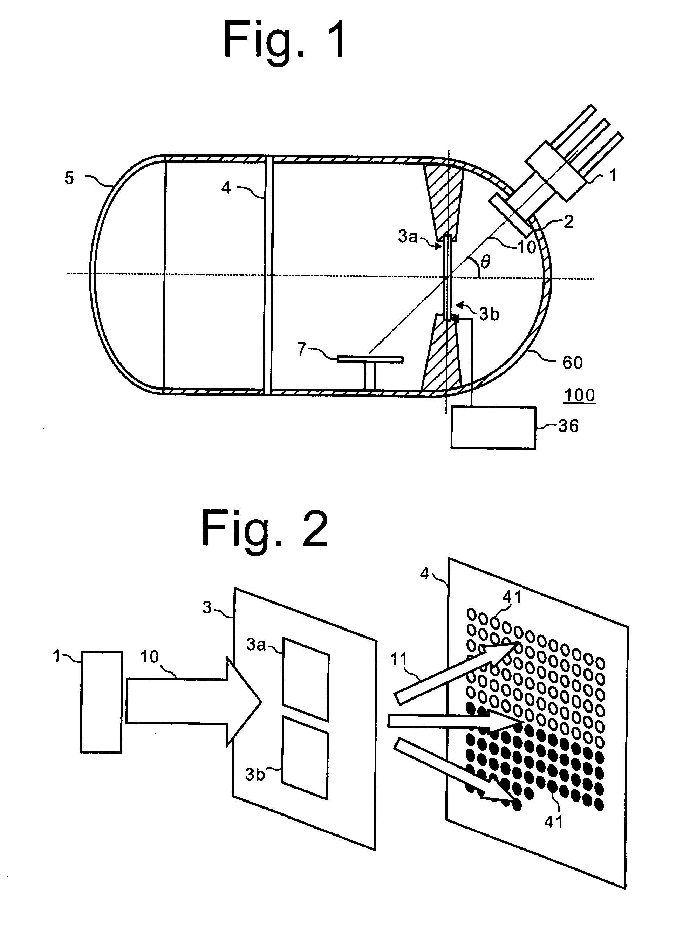

Fig. 1 is a schematic cross-sectional view showing a lighting optical system 100 according to the present invention as one exemplary embodiment;
Fig. 2 is a conceptual diagram illustrating the relationship between a holographic liquid crystal element 3 and a phosphor plate 4 in the lighting optical system 100;

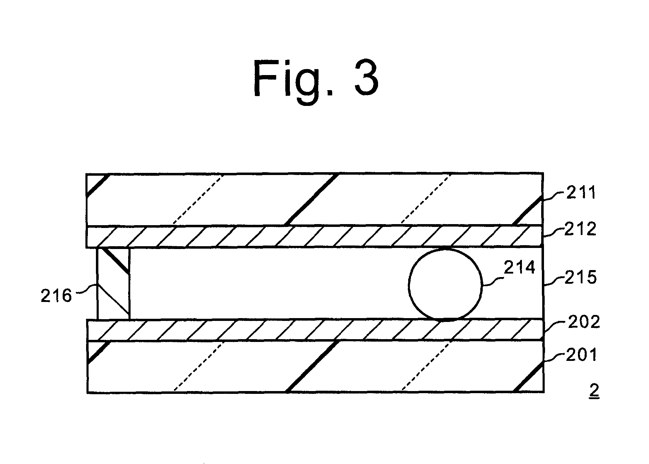

Fig. 3 is a schematic cross-sectional view of the holographic liquid crystal element (refractive optical element) in the exemplary embodiment of the present invention, cut along its thickness direction;

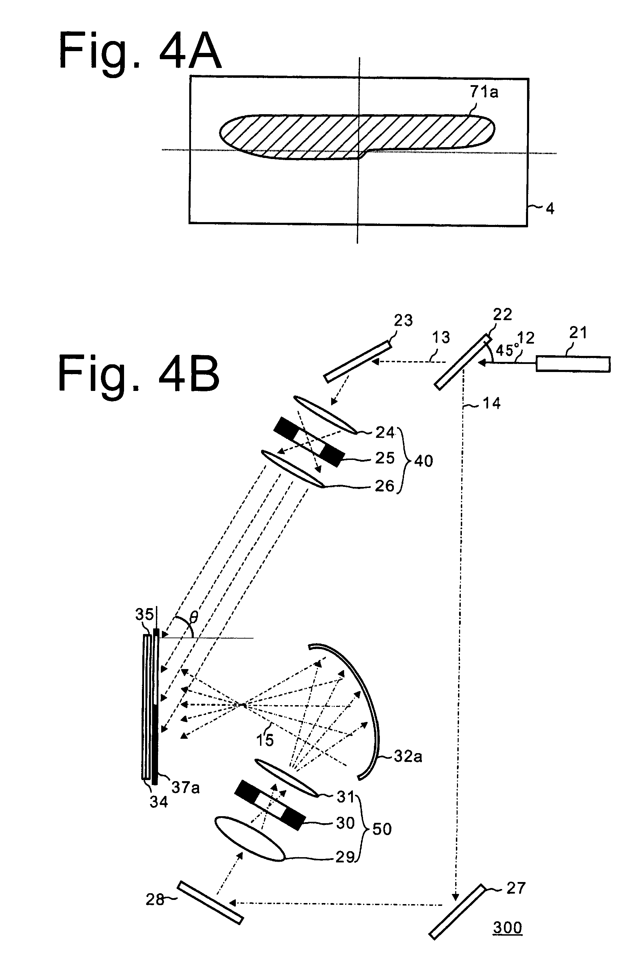

Fig. 4A is a conceptual diagram illustrating the light distribution state by the regeneration light beams regenerated on the basis of wavefront conversion information recorded on a wavefront conversion information recording area (pixel) 3a of the holographic liquid crystal element 3, and Fig. 4B is a schematic diagram illustrating one example of an optical sprit system interference exposure apparatus 300, both for describing how the period microstructure is formed in the wavefront conversion information recording area (pixel) 3a of the holographic liquid crystal element 3 (how to record the wavefront conversion information);

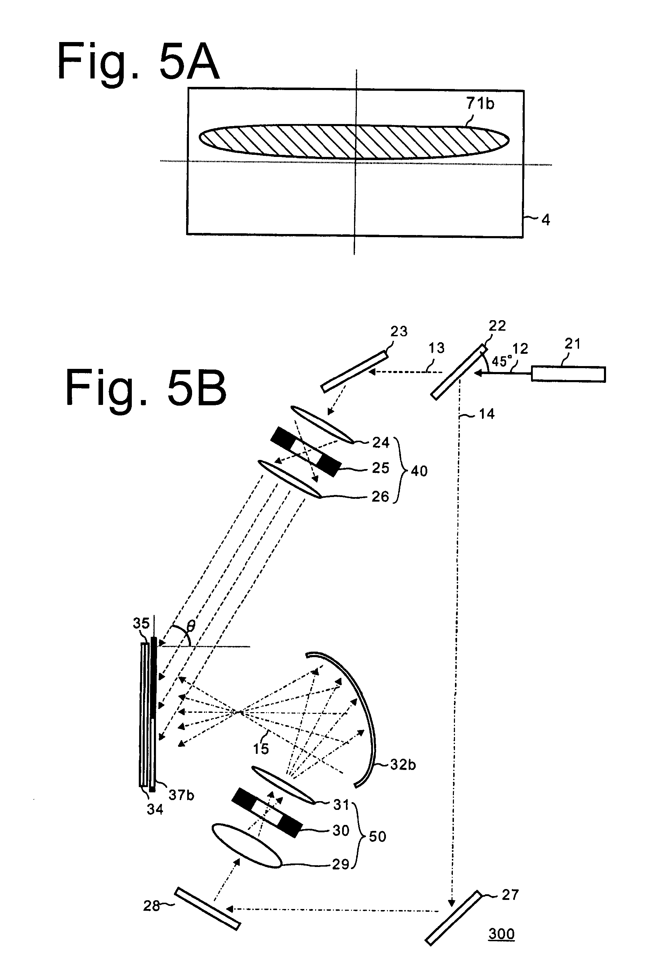

Fig. 5A is a conceptual diagram illustrating the light distribution state by the regeneration light beams regenerated on the basis of wavefront conversion information recorded on a wavefront conversion information recording area (pixel) 3b of the holographic liquid crystal element 3, and Fig. 5B is a schematic diagram illustrating another example of the optical sprit system interference exposure apparatus 300, both for describing how the period microstructure is formed in the wavefront conversion information recording area (pixel) 3b of the holographic liquid crystal element 3 (how to record the wavefront conversion information);

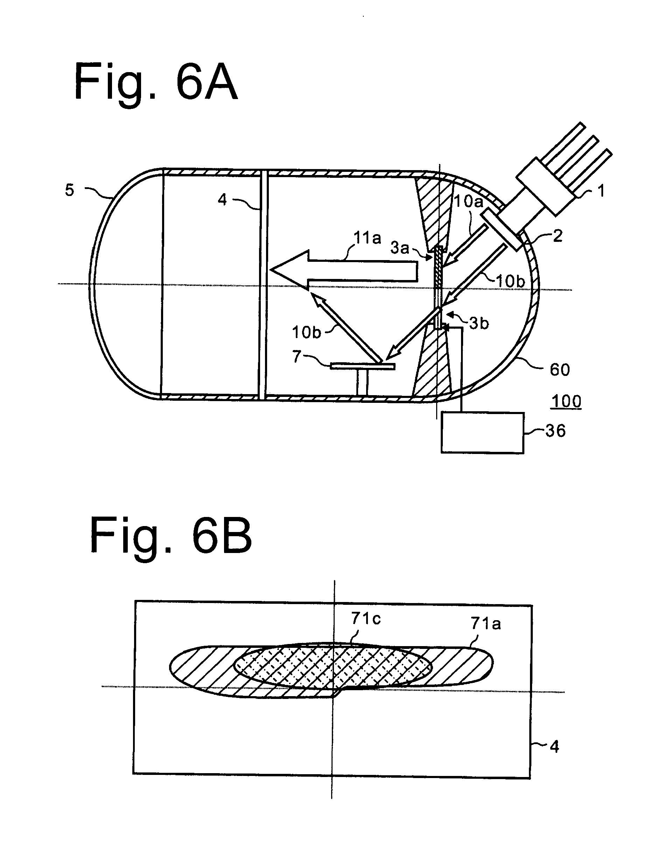

Fig. 6A is a schematic cross-sectional view of the lighting optical system 100 illustrating the formation of the light distribution state when the pixel (wavefront conversion information recording area) 3a of the holographic liquid crystal element 3 is turned OFF (no voltage is applied) and the pixel (wavefront conversion information recording area) 3b is turned ON (a voltage is applied), and Fig. 6B is a conceptual diagram showing the light distribution state achieved by the lighting optical system 100 of Fig. 6A;

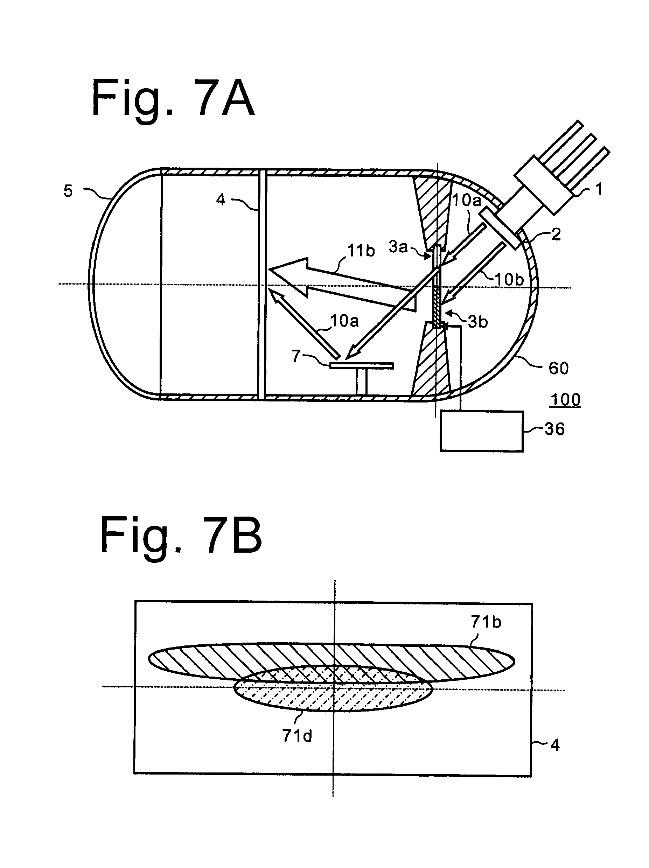

Fig. 7A is a schematic cross-sectional view of the lighting optical system 100 illustrating the formation of the light distribution state when the pixel (wavefront conversion information recording area) 3b of the holographic liquid crystal element 3 is turned ON (a voltage is applied) and the pixel (wavefront conversion information recording area) 3b is turned OFF (no voltage is applied), and Fig. 7B is a conceptual diagram showing the light distribution state achieved by the lighting optical system 100 of Fig. 7A;

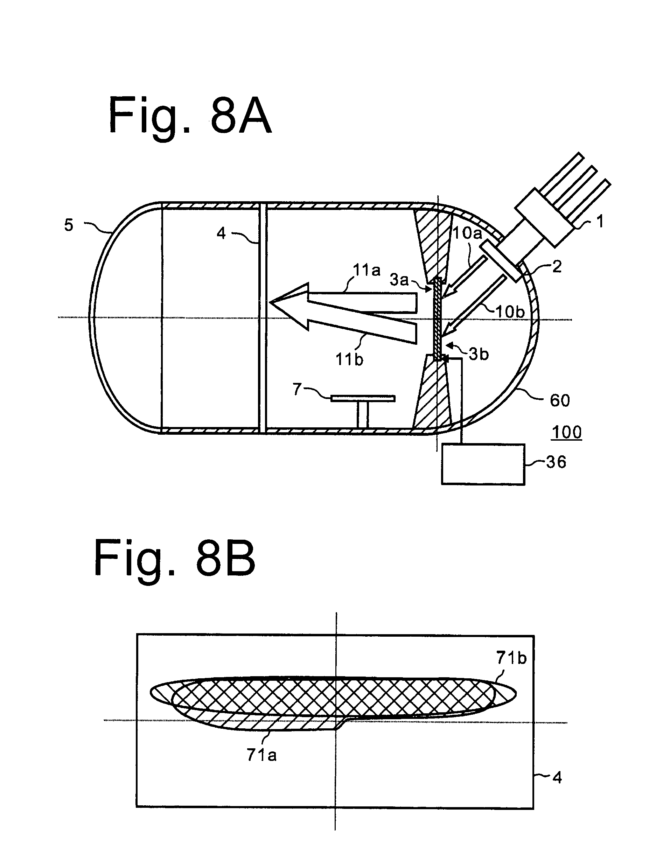

Fig. 8A is a schematic cross-sectional view of the lighting optical system 100 illustrating the formation of the light distribution state when both the pixels (wavefront conversion information recording areas) 3a and 3b of the holographic liquid crystal element 3 are turned OFF (no voltage is applied), and Fig. 8B is a conceptual diagram showing the light distribution state achieved by the lighting optical system 100 of Fig. 8A;

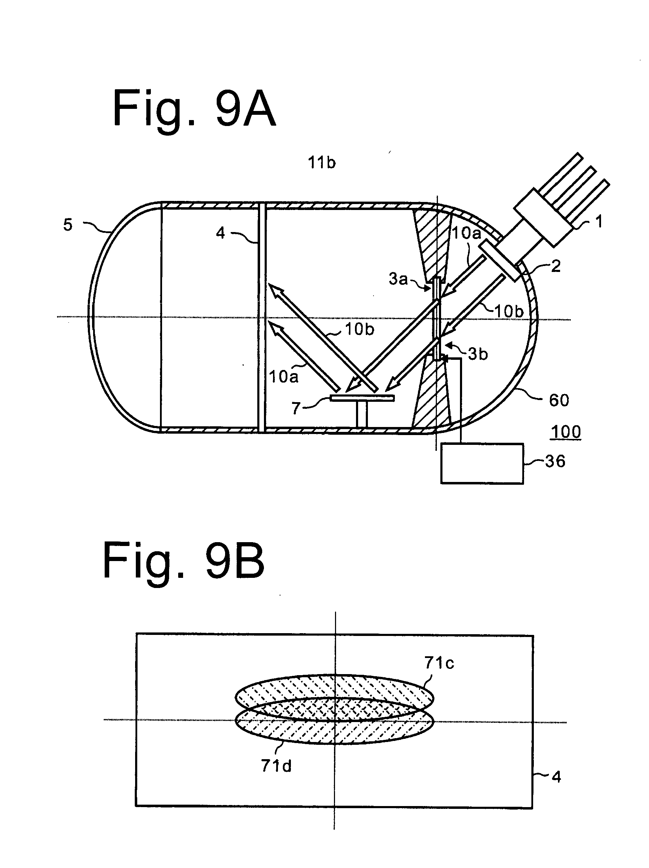

Fig. 9A is a schematic cross-sectional view of the lighting optical system 100 illustrating the formation of the light distribution state when both the pixels (wavefront conversion information recording areas) 3a and 3b of the holographic liquid crystal element 3 are turned ON (no voltage is applied), and Fig. 9B is a conceptual diagram showing the light distribution state achieved by the lighting optical system 100 of Fig. 9A; and

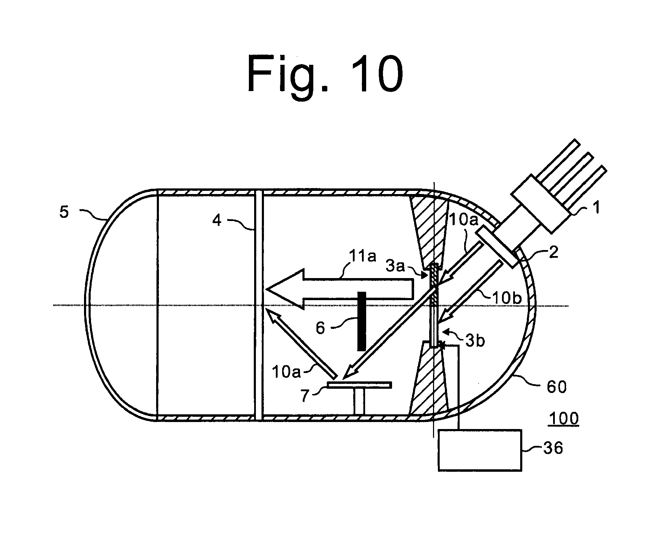

Fig. 10 is a schematic cross-sectional view of a modification of the lighting optical system 100 according to the present exemplary embodiment.

### Description of Exemplary Embodiments

A description will now be made below to lighting optical systems of the present invention with reference to the accompanying drawings in accordance with exemplary embodiments.

Fig. 1 is a schematic cross-sectional view showing a lighting optical system 100 according to the present invention as one exemplary embodiment. Fig. 2 is a conceptual diagram illustrating the relationship between a holographic liquid crystal element 3 and a phosphor plate 4 in the lighting optical system 100. Note that every dimension, position, angle, and the like of each part illustrated in the drawings are shown for illustration purposes only and are different from actual dimension, position, angle, and the like thereof.

The lighting optical system 100 can be, for example, a lighting unit for use in a projector type vehicular headlamp or the like, and can be configured to include a casing 60, a light source 1, a collimating lens 2, a holographic liquid crystal element (or a refractive optical element) 3, a phosphor plate (wavelength converter) 4, a projector lens 5, a mirror 7, and the like. If necessary, a light shielding member 6 (forming a cut-off pattern) may be installed therein. (See Fig. 10.) The light source 1, the collimating lens 2, the holographic liquid crystal element 3, the phosphor plate 4, the projector lens 5, and the mirror 7 can be held by the casing 60. The holographic liquid crystal element 3 can be connected to a controller 36.

The light source 1 can be a high-output laser such as a semiconductor laser diode (LD), example of which may include a blue laser diode (or deflection laser). As shown in Fig. 1, blue laser beam (illumination light) 10 can be emitted from the light source 1, can pass through the collimating lens 2, and then can be incident on the surface of the holographic liquid crystal element 3 in a direction with an angle of incidence θ. In the present exemplary embodiment, the light source 1 can be a semiconductor laser diode emitting blue laser beams with a center wavelength of 405 nm. Note that the light source 1 may be a high-output light-emitting diode. Further, although the center wavelength is not limited to 405 nm and may be 488 nm or the like, the center wavelength is preferably 380 nm or higher in order to avoid any damage on the holographic liquid crystal element 3.

The collimating lens 2 can collimate the laser beams 10 from the light source 1 while it can expand the beam diameter of the light beams 10. Specifically, the collimating lens 2 can contribute to the formation of light distribution shape which is slightly wide in a horizontal direction, namely being a natural ellipse elongated in a lateral direction.

With reference to Fig. 3, the holographic liquid crystal element 3 can be a liquid crystal element having a liquid crystal layer 215 including a transparent polymer resin and a low-molecular liquid crystal material (a material capable of responding to an electric field). The liquid crystal layer 215 can include a regional distribution or a concentration distribution of the transparent polymer resin and the low-molecular liquid crystal material, so that the resulting refraction index distribution can have a planar or three-dimensional stripe structure (which will exert a wavefront conversion function). The holographic liquid crystal element 3 can further include transparent electrodes 202 and 212 arranged on arbitrary selected area (pixel) to be applied with a voltage.

The wavefront conversion function can be a function for converting short-wavelength laser beams (illumination light) 10 emitted from the light source 1 and having passed through the collimating lens 2 to regeneration light beams 11 having a given light distribution pattern (for example, light distribution state required for a vehicular headlamp) on the basis of wavefront conversion information. Here, the wavefront conversion information can be recorded by forming a refraction index distribution on the holographic liquid crystal element 3 as the planar or three-dimensional stripe structure. In the present exemplary embodiment different pieces of wavefront conversion information can be recorded on respective areas on the surface of the holographic liquid crystal element 3 (being the respective wavefront conversion information recording areas (pixels) 3a and 3b). Further, the respective wavefront conversion information recording areas (pixels) 3a and 3b can be separately applied with a voltage, or can be separately controlled to be turned ON / OFF.

In the present exemplary embodiment, not only the light distribution shape of the regeneration light beams 11 but also luminance distributions thereof can be generated. Specifically, the holographic liquid crystal element 3 can be processed on a nanoscale so that the blue laser beams can be provided with a light intensity distribution by the holographic liquid crystal element 3 in accordance with the applied voltages while a desired cut-off shape can be formed.

The method of producing the holographic liquid crystal element 3 will be described with reference to Fig. 3 later. Further, the wavefront conversion information can be recorded by exposure with an optical division-type interference exposure apparatus 300 as shown in Fig. 4B or 5B. The recording method will be detailed later with reference to Figs. 4B and 5B. Note that the wavelength of laser light to be used when the wavefront conversion information is recorded to form the holographic liquid crystal element 3 is preferably as close that of the laser light 10 emitted from the light source 1 as possible. Further, it is desired that the regeneration light beams 11 of the holographic liquid crystal element 3 be regenerated at a position of the phosphor plate 4 to be arranged in a subsequent stage.

The mirror 7 can be arranged in a stage subsequent to the holographic liquid crystal element 3 and at a position where, when the laser beam 10 having been incident on the holographic liquid crystal element 3 with the prescribed angle of incidence θ pass through the holographic liquid crystal element 3 without any change, the laser beam 10 is incident thereon so as to be reflected to the phosphor plate 4 to be arranged in a stage subsequent to the mirror 7. The mirror 7 can be composed of a mirror-finished mirror or one with weakly diffused property. In the present exemplary embodiment, the laser beam 10 having passed through the holographic liquid crystal element 3 as is can be used as the light beam for use in a vehicular headlamp, and accordingly, the mirror can be disposed at the position where the light beam reflected by the mirror 7 can be projected onto the phosphor plate arranged in the subsequent stage. However, if the lighting optical system 100 is not used for a vehicular headlamp (or the reflected light beam is not used for light for a vehicular headlamp), the position is not limited to the above-mentioned position. In addition, the mirror 7 can be replaced with a certain light absorber in accordance with the required specification of the product.

The controller 36 can control the voltage to be applied to the holographic liquid crystal element 3, thereby changing the wavefront conversion function of the holographic liquid crystal element 3 to be turned ON or OFF. This control can change the light distribution states. In the present exemplary embodiment, if a voltage is applied to the holographic liquid crystal element 3 (ON state), the laser beam 10 incident on the holographic liquid crystal element 3 passes the same as is, and is reflected by the mirror disposed between the holographic liquid crystal element 3 and the phosphor plate 4 to be projected onto the phosphor plate 4. If a voltage is not applied (OFF state), the laser beam 10 incident on the holographic liquid crystal element 3 is changed to an optical image 11 with a prescribed light distribution on the basis of the wavefront conversion information recorded on the area where the laser beam 10 is incident, and then the optical image 11 is projected onto the phosphor plate 4.

The phosphor plate 4 can be arranged in a subsequent stage to the holographic liquid crystal element 3 and can be disposed at or near the focal position of the projector lens 5. Examples of the phosphor plate 4 may include one prepared by applying a phosphor 41 to a transparent substrate made of, for example, a resin or glass, one prepared by mixing a material for forming a transparent substrate (a resin, glass or the like) with a phosphor 41. In the present exemplary embodiment, the phosphor plate 4 can be prepared by mixing a glass material with a phosphor 41 to be formed into a glass substrate.

The material for the transparent substrate of the phosphor plate 4 can be formed from a glass material or a resin material having high heat resistance and light resistance. Examples of the resin materials to be used may include acrylonitrile-butadiene-styrene (ABS) resins, silicone resins, polycarbonate resins, polystyrere resins, acrylic resins, and epoxy resins.

The phosphor 41 can be a material that can absorb, or can be excited by, light beams at wavelength regions ranging from UV to blue to emit (wavelength-convert to) visible light beams. Preferable examples thereof may include a material that can absorb blue or UV light beams to emit yellow light beams or green light beams and red light beams. Examples of the material emitting yellow light may include a YAG-based phosphor material. Further examples thereof may include a silicate-based phosphor material, an aluminate-based phosphor material, a nitride-based phosphor material, a sulfide-based phosphor material, an oxysulfide-based phosphor material, a borate-based phosphor material, a phosphate-borate-based phosphor material, a phosphate-based phosphor material, and a halophosphate-based phosphor material.

The thickness of the phosphor plate 4 (or alternatively, the applied thickness of the phosphor when the phosphor is applied) and the density of the phosphor 41 can be appropriately optimized in accordance with the intensity of the light beams from the light source 1. It is desirable that the color of the emitted light from the phosphor plate 4 be white. Therefore, the thickness and the density thereof can be set such that the blue light from the light source 1 is still contained in the resulting light beams. In addition, since the center area of the low-beam light distribution is brighter than the other area, the density of the phosphor at the center area is made high or the thickness thereof at the center area is made thick. The thickness of the phosphor plate 4 (or alternatively, the applied thickness of the phosphor when the phosphor is applied) and/or the density of the phosphor 41 can be changed in this manner in accordance with the luminance distribution of the regeneration light beams 11, white light can be provided in all directions.

As shown in Fig .2, the upper half of the phosphor plate 4 is composed of the phosphors 41 with white circles while the lower half of the phosphor plate 4 is composed of filled circles in order to represent the density of the phosphors 41. Specifically, the lower half of the phosphor plate 4 corresponds to the center bright area of the low beam light distribution to represent the higher density of the phosphor 41 while the upper half thereof represents the lower density of the phosphor 41 being a darker area. Note that the lower part below the cut-off line, specifically, right lower part below the cut-off line does not include the phosphor 41. Of course, the density of the phosphor can be appropriately changed in accordance with desired light distribution state.

The phosphor 41 can be illuminated with the regeneration light beams 11 being blue light beams projected onto the phosphor plate 4, and the phosphor 41 can emit yellow light beams or green and red light beams (the light beams are mixed with remaining blue light beams of the light source 1 to generate pseudo-white light). Since the phosphor plate 4 is disposed at or near the focal point of the projector lens 5, the white light image can be projected forward and inverted through the projector lens 5.

The projector lens 5 can be a convex lens and can converge the regeneration light beams 11 emitted from the phosphor plate 4 (or the illumination light 10 having passed through the holographic liquid crystal element 3 as is), and then can project the light forward while inverting the same.

As discussed, the present exemplary embodiment with the above configuration can cause the controller 36 to control the voltage to be applied to the holographic liquid crystal element 3, thereby converting the laser beam 10 into the prescribed regeneration light image 11 or allowing the laser beam 10 to pass therethrough as is. Thus, the different positions on the surface of the holographic liquid crystal element 3, for example, the respective wavefront conversion information recording areas (pixels) 3a and 3b where different pieces of wavefront conversion information can be recorded, can be separately supplied with a voltage, thereby electrically changing the shape or the like of the projection image.

Fig. 3 is a schematic cross-sectional view of the holographic liquid crystal element (refraction optical element) 3 in the exemplary embodiment of the present invention, when cut along its thickness direction. Hereinafter, the method of producing the holographic liquid crystal element 3 will be described.

First, a pair of glass substrates 201 and 211 which each have a transparent electrode (ITO, for example) formed thereon are prepared. Here, the glass substrates 201 and 211 can include the transparent electrodes 202 and 212 on the respective surfaces, respectively. Each of the glass substrates 201 and 211 can have a thickness of approximately 0.7 mm and can be formed from an alkali-free glass material. Each of the transparent electrodes 202 and 212 can have a thickness of approximately 150 nm and can be formed from an indium-tin oxide (ITO) with a surface patterned in a desired planar shape. For example, the transparent electrode 202 can be patterned in a line shape (strip shape) whereas the transparent electrode 212 can be formed on the entire substrate surface.

Before assembly, the glass substrate with ITO electrode 201, 211 can be washed with a washing machine. The washing method can be composed of brush washing using an alkali cleaning agent, pure water washing, air blowing, UV irradiation, and infrared ray drying in order. Another washing method can include high-pressure spraying washing, plasma washing, and the like.

Next, a main sealing agent containing a gap control agent in an amount of 2wt% to 5wt% can be applied onto one of the glass substrate (for example, the glass substrate 201) to form a gap control layer 216. The formation method can be a screen printing, or an application method utilizing a dispenser. The gap control agent can be selected appropriately so that the thickness of the liquid crystal layer 215 is, for example, 10 µm.

Plastic balls with a diameter of 9 µm to 10 µm (produced by Sekisui House Ltd.) serving as a gap control agent 214 can be scattered onto the other one of the glass substrate (for example, the glass substrate 211) by a dry gap spreader.

Next, the glass substrates 201 and 211 are overlaid with each other with the particular surfaces facing to each other, and then they can be heat-treated while being applied with a pressure by a press, to thereby cure the main sealing agent. In the present exemplary embodiment, the heat-treatment was performed at 150°C for 3 hours.

According to these processes, a blank cell can be fabricated. Note that such a blank cell can be fabricated by any suitable general method of fabricating a liquid crystal element.

The thus fabricated blank cell can be injected with a liquid crystal material under vacuum to form the liquid crystal layer 215. In the present exemplary embodiment, the liquid crystal material can be prepared by mixing a polymeric resin (photocurable material) with a liquid crystal. The polymeric resin can be added with a photopolymerization initiator in a small amount, wherein the photopolymerization initiator should be reacted with the irradiation of light at a wavelength corresponding to the light emitted from the laser light source 21 (shown in Figs. 4B and 5B) in order for the polymeric resin to be cured with the light of the light source 21. Examples of the liquid crystal may include a mixed-type liquid crystal material. In this case a liquid crystal having a larger refractive anisotropy is preferable. The liquid crystal material including a liquid crystal and a polymeric resin mixed or dissolved therein can be injected. The mixing ratio of the polymeric resin and the liquid crystal can be 50:50 to 60:40 where the ratio of the photocurable material is preferably slightly higher than that of the liquid crystal.

Then, the optical division-type interference exposure apparatus 300 as shown in Figs. 4B and 5B can be used to form the period microstructure on the holographic liquid crystal element 3 (record the wavefront conversion information thereon).

In the present exemplary embodiment, the interference exposure can be performed on two locations, including the respective wavefront conversion information recording areas (pixels) 3a and 3b. The position of the wavefront conversion information recording areas 3a and 3b can be aligned with the position of the transparent electrode 202 (or 212) patterned in a line shape (stripe shape) in terms of position and size. By doing so, different pieces of wavefront conversion information can be recorded pixel by pixel, thereby obtaining different types of light distribution state by switching the states of the holographic liquid crystal element 3.

Fig. 4A is a conceptual diagram illustrating the light distribution state by the regeneration light beams regenerated on the basis of the wavefront conversion information recorded on the wavefront conversion information recording area (pixel) 3a of the holographic liquid crystal element 3, and Fig. 4B is a schematic diagram illustrating one example of the optical sprit system interference exposure apparatus 300, both for describing how the period microstructure is formed in the wavefront conversion information recording area (pixel) 3a of the holographic liquid crystal element 3 (how to record the wavefront conversion information).

The wavefront conversion information recording area 3a can include the information containing the low-beam light distribution state as shown in Fig. 4A (light distribution pattern 71a), for example. The light distribution pattern 71a shown in Fig. 4A is a pattern projected onto the phosphor plate 4 shown in Fig. 1, and accordingly, if it is used as an illumination optical system 100, the light image in the pattern 71a can be inverted upside down by the projector lens 5 to be projected forward. Of course, the light distribution pattern to be recorded as information on the wavefront conversion information recording area 3a can be appropriately changed in accordance with the intended use.

Fig. 4B is a schematic diagram illustrating one example of the optical sprit system interference exposure apparatus 300, wherein respective arrows show the traveling directions of light beams.

The optical sprit system interference exposure apparatus 300 can include a laser light source 21; a half mirror 22; a reference light optical system (including a reflector 23, and a converging lens 24, a pinhole 25, and a collimator lens 26 which serve together as a collimator (beam expander) 40); and an object optical system (including a reflecting mirror 27, another reflecting mirror 28, and a converging lens 29, a pinhole 30, and a convex lens 31 which serve together as an object light optical system 50, and a reflector mirror 32 (32a)).

The laser light source 21 can be a laser oscillator having almost the same emission wavelength (for example, 405 nm) as that of the light source 1 shown in Fig. 1. Note that the emission wavelength of the laser light source 21 is preferably that of the light source 1 of Fig. 1 ±10 nm. The laser light 12 oscillated from the laser light source 21 can be incident on the half mirror 22 at an angle of incidence of 45 degrees so that the light beams can be split to light beams 13 and 14 in two travelling paths.

The light beams 13 can be reflected by the reflector 23 and can enter the collimator (beam expander) 40. As shown, the collimator 40 can be composed of the converging lens 24, the pinhole 25, and the collimator lens 26.

The light beams 13 having entered the collimator 40 can be converged by the conversing lens 24 and can pass through the pinhole 25 at which the focal point of the converging lens 24 is located, and then can be incident on the collimator lens 26. The light beams having been incident on the collimator lens 26 can be converted into parallel light beams to become reference light 13 for producing hologram. At that time, the angle of incidence on the hologram may be adjusted by a prism or the like.

The reference light 13 can be incident on the surface of the wavefront conversion information recording area 3a of the holographic liquid crystal element 3 at an angle of incidence θ. Herein, the angle of incidence θ during the information recording is preferably the same as the angle of incidence θ of laser beam 10 from the light source 1 as shown in Fig. 1.

On the other hand, the split light beams 14 from the half mirror 22 can be reflected by the reflecting mirrors 27 and 28 to enter the object light optical system 50. The object light optical system 50 can be composed of the converging lens 29, the pinhole 30, and the convex lens 31.

The light beams 14 having entered the object light optical system 50 can be converged by the conversing lens 29 and can pass through the pinhole 30 at which the focal point of the converging lens 29 is located, and then can be incident on the convex lens 31. The light beams 14 having been incident on the convex lens 31 can be further diffused to be incident on the reflector mirror 32 (32a).

The reflector mirror 32 (reflector mirror for forming a low-beam light distribution 32a) can serve as a mirror for forming a low-beam light distribution and can reflect the light beams 14 so that the reflected light beams can become object light 15 for producing hologram. The object light beams 15 can be incident on the surface of the wavefront conversion information recording area 3a of the holographic liquid crystal element 3 in a normal direction. The reflector mirror 32 (reflector mirror for forming a low-beam light distribution 32a) can be used to form a desired light distribution state (as shown in Fig. 4A) of reflected light beams based on the resulting information.

The reference light 13 and the object light 15 can be projected onto a predetermined position on the holographic liquid crystal element 3 (wavefront conversion information recording area 3a) through a photo mask 37. In the first interference exposure, the opening of the photo mask 37 can be matched to the wavefront conversion information recording area 3a.

The reference light 13 and the object light 15 having been incident on the wavefront conversion information recording area 3a can be interfered with each other. Phase information and amplitude information contained in the reference light 13 and the object light 15 can be recorded by means of the interference fringes of these beams of light as a three-dimensional fringe structure composed of distributions of the photocurable material and the liquid crystal contained in the liquid crystal cell 215. Specifically, the photocurable material starts curing at the antinodes of the standing wave induced by the light beams of the laser light source 21 while the liquid crystal can be concentrated at the nodes, thereby forming the fringe structure. Since the orientation direction of the liquid crystal may be limited due to the direction of the growth of the cured resin, the resulting element can show birefringence. Note that the light intensity ratio of the reference light 13 to the object light 15 to be incident on the holographic liquid crystal element 3 is preferably 2:1 to 10:1, and the irradiation intensity can be 5 mW/cm², and the irradiation time can be 5 minutes. (The total sum of the light intensities can be 1.5 mJ/cm².)

Fig. 5A is a conceptual diagram illustrating the light distribution state by the regeneration light beams regenerated on the basis of the wavefront conversion information recorded on the wavefront conversion information recording area (pixel) 3b of the holographic liquid crystal element 3, and Fig. 5B is a schematic diagram illustrating another example of the optical sprit system interference exposure apparatus 300, both for describing how the period microstructure is formed in the wavefront conversion information recording area (pixel) 3b of the holographic liquid crystal element 3 (how to record the wavefront conversion information).

The wavefront conversion information recording area 3b can include the information containing the light distribution state for city driving as shown in Fig. 5A (light distribution pattern 71b), for example, for illuminating wider peripheral areas. The light distribution pattern 71b shown in Fig. 5A is a pattern projected onto the phosphor plate 4 shown in Fig. 1, and accordingly, if it is used as an illumination optical system 100, the light image in the pattern 71b can be inverted upside down by the projector lens 5 to be projected forward. Of course, the light distribution pattern to be recorded as information on the wavefront conversion information recording area 3b can be appropriately changed in accordance with the intended use.

Fig. 5B is a schematic diagram illustrating one example of the optical sprit system interference exposure apparatus 300, wherein respective arrows show the traveling directions of light beams. Since the optical sprit system interference exposure apparatus 300 can have the same configuration as that in Fig. 4B, the detailed description for the optical sprit system interference exposure apparatus 300 is omitted here.

In this case, the interference exposure as shown in Fig. 4B can first be performed, and then, the photo mask 37 can be shifted as shown in Fig. 5B for performing interference exposure again. In the second interference exposure, the opening of the photo mask 37 can be matched to the wavefront conversion information recording area 3b. In addition to this, the reflector mirror 32a can be replaced with another reflector mirror 32b for the formation of the light distribution for city driving arranged at almost the same position as that in the first interference exposure. Then, the second interference exposure can be performed.

In this manner, the holographic liquid crystal element 3 can be completed. The thus produced holographic liquid crystal element 3 without applying a voltage can be irradiated with laser beams at an angle of incidence θ, to produce regeneration light beams. The regenerated light beams can form an optical image formed on the basis of the reflector mirror 32 (32a, 32b) in a normal direction on an opposite side to the light source. For example, in the present exemplary embodiment, when laser beams are projected onto the wavefront conversion information recording area (pixel) 3a without applying a voltage thereto at an angle of incidence θ, the low-beam light distribution state 71a as shown in Fig. 4A can be generated. When laser beams are projected onto the wavefront conversion information recording area (pixel) 3b without applying a voltage thereto at an angle of incidence θ, the light distribution state for city driving 71b as shown in Fig. 5A can be generated.

In the above-described exemplary embodiment, the opening position of the photo mask 37 can be changed to perform interference exposure with the respective reflector mirrors 32a and 32b each used for forming a different light distribution pattern at respective positions with the reference light beams 13 at an angle of incidence θ. In another exemplary embodiment, three or more types of position of the opening of the photo mask 37 and light distribution pattern of the reflector mirror 32 can be utilized to perform interference exposure at three or more times. In this case, in addition to the above two types of light distribution state, other light distribution states such as a high-beam light distribution state, a light distribution state for highway traveling, and the like can be added to a vehicular headlamp utilizing the lighting optical system as other functions.

Next, with reference to Figs. 6 to 9, a description will be given of the switching operation of the light distribution states produced by the lighting optical system 100 in accordance with the present exemplary embodiment. In the present exemplary embodiment, the application of a voltage to the two pixels or wavefront conversion information recording areas 3a and 3b can be separately controlled to electrically change four types of light distribution state from one another as shown in Figs. 6B, 7B, 8B, and 9B.

Fig. 6A is a schematic cross-sectional view of the lighting optical system 100 illustrating the formation of the light distribution state when the pixel (wavefront conversion information recording area) 3a of the holographic liquid crystal element 3 is turned OFF (no voltage is applied) and the pixel (wavefront conversion information recording area) 3b is turned ON (a voltage is applied), wherein respective arrows show the traveling directions of light beams. Fig. 6B is a conceptual diagram showing the light distribution state (pattern) formed on the phosphor plate 4. In the present exemplary embodiment, if it is used as an illumination optical system 100, the light image can be inverted upside down by the projector lens 5 to be projected forward.

When the illumination optical system 100 is turned on, the light source 1 can emit laser beams 10 (10a and 10b) through the collimator lens 2 to be projected onto the holographic liquid crystal element 3.

In this case, the controller 36 can control the pixel (wavefront conversion information recording area) 3a of the holographic liquid crystal element 3 to be turned OFF (with no voltage applied) whereas the pixel 3b is controlled to be turned ON (with a voltage applied). Then, as shown in Fig. 6A, the laser beams 10a or reference light can be incident on the pixel 3a to be converted on the basis of the wavefront conversion information recorded in the pixel 3a, thereby producing regeneration light beams as the object light 11a for forming the light distribution pattern 71a for a low-beam light distribution pattern. This pattern 71a can be projected on the phosphor plate 4. Namely, the reference light beams 10a incident on the holographic liquid crystal element 3 at an angle of incidence θ can be refracted by the pixel 3a to be directly projected onto the phosphor plate 4.

On the other hand, the laser beams 10b incident on the pixel 3b can pass through the pixel 3b without refraction to be reflected by the mirror 7. The reflected light beams can be slightly spread to be projected onto the phosphor plate 4. In this case, the light distribution pattern 71c can be designed to become a light distribution pattern for highway driving as shown in Fig. 6B. Therefore, the pattern 71c can be concentrated at the center of the phosphor plate 4 (there is no glare light to the oncoming vehicle).

As discussed, the controller 36 can control the pixel (wavefront conversion information recording area) 3a of the holographic liquid crystal element 3 to be turned OFF (with no voltage applied) whereas the pixel 3b is controlled to be turned ON (with a voltage applied). With this configuration, the synthesized optical image to be projected onto the phosphor plate 4 can be that shown in Fig. 6B. Specifically, the light distribution pattern optical image can include a cut-off shape for low beam distribution and a bright center area above the center horizontal line where glare is not directed to oncoming vehicles. Accordingly, the light distribution state is suitable for highway driving when oncoming vehicles exist.

Fig. 7A is a schematic cross-sectional view of the lighting optical system 100 illustrating the formation of the light distribution state when the pixel (wavefront conversion information recording area) 3a of the holographic liquid crystal element 3 is turned ON (a voltage is applied) and the pixel (wavefront conversion information recording area) 3b is turned OFF (no voltage is applied), wherein respective arrows show the traveling directions of light beams. Fig. 7B is a conceptual diagram showing the light distribution state (pattern) formed on the phosphor plate 4. In the present exemplary embodiment, if it is used as an illumination optical system 100, the light image can be inverted upside down by the projector lens 5 to be projected forward.

In this case, the controller 36 can control the pixel (wavefront conversion information recording area) 3a of the holographic liquid crystal element 3 to be turned ON (with a voltage applied) whereas the pixel 3b is controlled to be turned OFF (with no voltage applied). Then, as shown in Fig. 7A, the laser beams 10b or reference light can be incident on the pixel 3b to be converted on the basis of the wavefront conversion information recorded in the pixel 3b, thereby producing regeneration light beams as the object light 11b for forming the light distribution pattern 71b for city driving. This pattern 71b can be projected on the phosphor plate 4. Namely, the reference light beams 10b incident on the holographic liquid crystal element 3 at an angle of incidence θ can be refracted by the pixel 3b to be directly projected onto the phosphor plate 4.

On the other hand, the laser beams 10a incident on the pixel 3a can pass through the pixel 3a without refraction to be reflected by the mirror 7. The reflected light beams can be slightly spread to be projected onto the phosphor plate 4. In this case, the light distribution pattern 71d can be designed to become a light distribution pattern for a high-beam light distribution as shown in Fig. 7B. Therefore, the pattern 71d can be concentrated at the center of the phosphor plate 4 (including the portion below the center).

As discussed, the controller 36 can control the pixel (wavefront conversion information recording area) 3a of the holographic liquid crystal element 3 to be turned ON (with a voltage applied) whereas the pixel 3b is controlled to be turned OFF (with no voltage applied). With this configuration, the synthesized optical image to be projected onto the phosphor plate 4 can be that shown in Fig. 7B. Specifically, the synthesized light distribution pattern optical image can include a wide light distribution and a bright center area (including the lower side below the center). Accordingly, the light distribution state is suitable for city driving when no oncoming vehicles exist.

Fig. 8A is a schematic cross-sectional view of the lighting optical system 100 illustrating the formation of the light distribution state when both the pixels (wavefront conversion information recording areas) 3a and 3b of the holographic liquid crystal element 3 are turned OFF (no voltage is applied), wherein respective arrows show the traveling directions of light beams. Fig. 8B is a conceptual diagram showing the light distribution state (pattern) formed on the phosphor plate 4. In the present exemplary embodiment, if it is used as an illumination optical system 100, the light image can be inverted upside down by the projector lens 5 to be projected forward.

In this case, as in the case described with reference to Fig. 6A, the laser beams 10a or reference light can be incident on the pixel 3a to be converted on the basis of the wavefront conversion information recorded in the pixel 3a, thereby producing regeneration light beams as the object light 11a for forming the light distribution pattern 71a for a low-beam light distribution pattern. This pattern 71a can be projected on the phosphor plate 4. Furthermore, as in the case described with reference to Fig. 7A, the laser beams 10b or reference light can be incident on the pixel 3b to be converted on the basis of the wavefront conversion information recorded in the pixel 3b, thereby producing regeneration light beams as the object light 11b for forming the light distribution pattern 71b for city driving. This pattern 71b can be projected on the phosphor plate 4.

Accordingly, the controller 36 can control both the pixels (wavefront conversion information recording areas) 3a and 3B of the holographic liquid crystal element 3 to be turned OFF (with no voltage applied). With this configuration, the synthesized optical image to be projected onto the phosphor plate 4 can be that shown in Fig. 8B. Specifically, the synthesized light distribution pattern optical image can include a wide light distribution pattern including the cut-off line for low-beam light distribution and being suitable for city driving when oncoming vehicles exist.

Fig. 9A is a schematic cross-sectional view of the lighting optical system 100 illustrating the formation of the light distribution state when both the pixels (wavefront conversion information recording areas) 3a and 3b of the holographic liquid crystal element 3 are turned ON (a voltage is applied), wherein respective arrows show the traveling directions of light beams. Fig. 8B is a conceptual diagram showing the light distribution state (pattern) formed on the phosphor plate 4. In the present exemplary embodiment, if it is used as an illumination optical system 100, the light image can be inverted upside down by the projector lens 5 to be projected forward.

In this case, the laser beams 10a and 10b that are incident on the respective pixels 3a and 3b can pass through the pixels 3a and 3b as shown in Figs. 6A (regarding the pixel 3b) and 7A (regarding the pixel 3a), and can be reflected by the mirror 7. The reflected light beams can be slightly spread to be projected onto the phosphor plate 4.

Therefore, when the pixels (wavefront conversion information recording areas) 3a and 3b of the holographic liquid crystal element 3 are turned ON (with a voltage applied), the synthesized image projected onto the phosphor plate 4 can be that shown in Fig. 9B. Specifically, the light distribution pattern optical image can include a bright center area including the area below the center horizontal line at or near the center of the phosphor plate 4. Accordingly, the light distribution state is suitable for highway driving when no oncoming vehicles exist.

As discussed above, the lighting optical system 100 of the present exemplary embodiment can electrically switch the light distribution states from one another in accordance with the traveling modes. Thus, a driver can drive an automobile with higher safety under various driving conditions.

In the present exemplary embodiment according to the present invention, the laser beams 10 from the light source 1 can be converted into desired light distribution patterns by means of the holographic liquid crystal element 3. The appropriate ON/OFF control of respective pixels of the holographic liquid crystal element 3 can cause the laser beams 10 to be converted to regeneration light beams as object light or to pass through without any conversion, thereby providing desired projected images.

In the above exemplary embodiment, the application of voltage can cause the element to pass the light and no application of voltage can cause the element to project its hologram image. In view of fail safe, the light distribution state to be projected when the holographic liquid crystal element 3 is not applied with a voltage is preferably a low-beam light distribution pattern.

The thickness of the phosphor plate 4 (or alternatively, the applied thickness of the phosphor when the phosphor is applied) and the density of the phosphor 41 can be appropriately changed in accordance with the intensity of the light beams from the light source 1. The shape of the phosphor plate 4 can be changed in accordance with the focal distance of the projector lens 5, for example, can be curved or bulged in a hemispherical shape at the center portion thereof. Furthermore, the center portion of the phosphor plate 4 may be made thick in accordance with the luminance distribution of the regeneration light beams 11 derived from the holographic liquid crystal element 3. The phosphor plates 4 with the above-describes shapes can be formed by melting glass or a resin material by heat to be liquefied, mixing it with a phosphor material (wavelength converting material), and injecting the mixture into a mold, or by melting a phosphor material itself by heat and injecting the molten material into a mold.

Further, if the cut-off shape cannot be formed only with the holographic liquid crystal element 3, a light shielding member 6 formed into a desired cut-off pattern can be provided as shown in Fig. 10. In this case, the light shielding member 6 can be interposed between the phosphor plate 4 and the holographic liquid crystal element 3 at an appropriate position so that part of the regeneration light beams 11a of the hologram image can be shielded, thereby forming the cut-off line in the light distribution pattern for low beam.

In the present exemplary embodiment, the holographic liquid crystal element 3 can include two independent areas (pixels) to be applied with a voltage for control, but the present invention is not limited thereto. The holographic liquid crystal element 3 can include three or more independent areas (pixels) where different pieces of wavefront conversion information representing different light distribution states can be recorded, respectively. Of course, the holographic liquid crystal element 3 can include only one pixel which can be turned on/off for simply switching a low-beam light distribution and a high-beam light distribution. Also in this case, any mechanical member is not required but the electrical means can switch the light distribution states.

In the present exemplary embodiment, the light intensity ratio of the laser beams 10a and 10b to be projected onto the pixels 3a and 3b of the holographic liquid crystal element 3 may be changed. For example, if the pixel 3a is provided with a function for forming a cut-off pattern (in the OFF state) and a high-beam pattern (in the ON state), it is preferable to increase the light intensity of the laser beams 10a to be projected onto the pixel 3a.

The lighting optical system according to the present invention can be applied not only to vehicular headlamps, but also to various illuminating devices such as vehicular rear lamps, vehicular fog lamps, vehicular interior/exterior illuminating devices, portable flashlight, general lighting fixtures, spotlights, stage illumination systems, and the like.

## Claims

1. A lighting optical system (100) comprising:
a light source (1) configured to emit light beams;
a holographic element (3);
a wavelength converter (4) configured to include a wavelength converting material which can be excited by the regeneration light beams from the holographic element (3) and emit visible light beams; and
a lens (5) configured to project the visible light beams from the wavelength converter,
**characterized in that** the holographic element (3) is a holographic liquid crystal element (3) configured to convert the light beams emitted from the light source (1) to regeneration light beams forming a prescribed light distribution pattern or alternatively allow the light beams to pass therethrough as they are, in accordance with a voltage applied thereto.

2. The lighting optical system (100) according to claim 1, **characterized in that** the wavelength converter (4) is a phosphor plate (4) including a phosphor as a wavelength converting material.

3. The lighting optical system (100) according to claim 1 or 2, **characterized in that** the holographic liquid crystal element (3) includes a plurality of pixels (3a, 3b) separately applied with a voltage, and
the plurality of pixels (3a, 3b) can convert the light beams emitted from the light source (1) to regeneration light beams having different light distribution shapes in accordance with the applied voltage, respectively.

4. The lighting optical system (100) according to any one of claims 1 to 3, **characterized by** further comprising a reflecting member (7) configured to reflect the light beams passing through the holographic liquid crystal element (3) without any conversion so that the light beams is allowed to be incident on the wavelength converter (4).

5. The lighting optical system (100) according to any one of claims 1 to 4, **characterized in that** the light beams emitted from the light source (1) has a center wavelength of 450 nm or shorter, and
the wavelength converter (4) can absorb light beams at a wavelength range of from ultraviolet to blue light.

6. The lighting optical system (100) according to any one of claims 2 to 5, **characterized in that** the phosphor is included in the wavelength converter (4) so that the phosphor is distributed therein in accordance with a luminance distribution of the regeneration light beams in terms of any one of its density of the phosphor contained in the wavelength converter (4) and a thickness of the wavelength converter.

## Patentansprüche

1. Optisches Beleuchtungssystem (100), das Folgendes aufweist:
eine Lichtquelle (1), die so konfiguriert ist, dass sie Lichtstrahlen emittiert;
ein holographisches Element (3);
eine Wellenlängenumwandlungsvorrichtung (4), die so konfiguriert ist, dass sie ein Wellenlängenumwandlungsmaterial aufweist, welches durch die Regenerationslichtstrahlen von dem holographischen Element (3) erregt werden und sichtbare Lichtstrahlen emittieren kann; und
eine Linse (5), die so konfiguriert ist, dass sie die sichtbaren Lichtstrahlen von der Wellenlängenumwandlungsvorrichtung projiziert,
**dadurch gekennzeichnet, dass** das holographische Element (3) ein holographisches Flüssigkristallelement (3) ist, das so konfiguriert ist, dass es die Lichtstrahlen, die von der Lichtquelle (1) emittiert werden, in Regenerationslichtstrahlen umwandelt, die ein vorgeschriebenes Lichtverteilungsmuster bilden, oder alternativ zulässt, dass die Lichtstrahlen wie sie sind durch dieses hindurchgehen, und zwar in Übereinstimmung mit einer daran angelegten Spannung.

2. Optisches Beleuchtungssystem (100) gemäß Anspruch 1, **dadurch gekennzeichnet, dass** die Wellenlängenumwandlungsvorrichtung (4) eine Phosphorplatte (4) ist, die Phosphor als ein Wellenlängenumwandlungsmaterial aufweist.

3. Optisches Beleuchtungssystem (100) gemäß Anspruch 1 oder 2, **dadurch gekennzeichnet, dass** das holographische Flüssigkristallelement (3) eine Vielzahl von Pixeln (3a, 3b) aufweist, an die separat eine Spannung angelegt wird, und
die Vielzahl der Pixel (3a, 3b) die Lichtstrahlen, die von der Lichtquelle (1) emittiert werden, in Regenerationslichtstrahlen mit unterschiedlichen Lichtverteilungsformen jeweils abhängig von der angelegten Spannung umwandeln kann.

4. Optisches Beleuchtungssystem (100) gemäß einem der Ansprüche 1 bis 3, **dadurch gekennzeichnet, dass** es ferner ein Reflexionsglied (7) aufweist, das so konfiguriert ist, dass es die Lichtstrahlen, die durch das holographische Flüssigkristallelement (3) hindurchgehen, ohne irgendeine Umwandlung reflektiert, so dass zugelassen wird, dass die Lichtstrahlen auf die Wellenlängenumwandlungsvorrichtung (4) einfallen.

5. Optisches Beleuchtungssystem (100) gemäß einem der Ansprüche 1 bis 4, **dadurch gekennzeichnet, dass** die Lichtstrahlen, die von der Lichtquelle (1) emittiert werden, eine mittlere Wellenlänge von 450nm oder kürzer aufweisen, und
die Wellenlängenumwandlungsvorrichtung (4) die Lichtstrahlen mit einem Wellenlängenbereich von ultraviolettem bis blauem Licht absorbieren kann.

6. Optisches Beleuchtungssystem (100) gemäß einem der Ansprüche 2 bis 5, **dadurch gekennzeichnet, dass** der Phosphor in der Wellenlängenumwandlungsvorrichtung (4) so enthalten ist, dass der Phosphor darin gemäß einer Leuchtdichteverteilung der Regenerationslichtstrahlen im Hinblick auf entweder die Dichte des Phosphors, der in der Wellenlängenumwandlungsvorrichtung (4) enthalten ist, und/oder einer Dicke der Wellenlängenumwandlungsvorrichtung verteilt ist.

## Revendications

1. Système optique d'éclairage (100) comprenant :
une source de lumière (1) agencée pour émettre des rayons lumineux ;
un élément holographique (3) ;
un convertisseur de longueur d'onde (4) agencé pour comprendre un matériau de conversion de longueur d'onde qui peut être excité par les rayons lumineux de régénération provenant de l'élément holographique (3) et émettre des rayons lumineux visibles ; et
une lentille (5) agencée pour projeter les rayons lumineux visibles à partir du convertisseur de longueur d'onde,
**caractérisé en ce que** l'élément holographique (3) est un élément holographique à cristaux liquides (3) agencé pour convertir les rayons lumineux émis par la source de lumière (1) en rayons lumineux de régénération formant un motif de distribution lumineuse prescrit, ou alternativement laisser passer les rayons lumineux à travers tels qu'ils sont, en fonction d'une tension appliquée.

2. Système optique d'éclairage (100) selon la revendication 1, **caractérisé en ce que** le convertisseur de longueur d'onde (4) est une plaque de phosphore (4) comprenant du phosphore comme matériau de conversion de longueur d'onde.

3. Système optique d'éclairage (100) selon la revendication 1 ou 2, **caractérisé en ce que** l'élément holographique à cristaux liquides (3) comprend une pluralité de pixels (3a, 3b) auxquels une tension est appliquée séparément, et
la pluralité de pixels (3a, 3b) peut convertir les rayons lumineux émis par la source de lumière (1) en rayons de lumineux de régénération ayant des formes de distribution lumineuse différentes en fonction de la tension appliquée, respectivement.

4. Système optique d'éclairage (100) selon l'une quelconque des revendications 1 à 3, **caractérisé en ce qu'**il comprend en outre un élément réfléchissant (7) agencé pour réfléchir les rayons lumineux passant à travers l'élément holographique à cristaux liquides (3) sans aucune conversion afin que les rayons lumineux puissent venir en incidence sur le convertisseur de longueur d'onde (4).

5. Système optique d'éclairage (100) selon l'une quelconque des revendications 1 à 4, **caractérisé en ce que** les rayons lumineux émis par la source de lumière (1) ont une longueur d'onde centrale de 450 nm ou moins, et
le convertisseur de longueur d'onde (4) peut absorber des rayons lumineux dans une plage de longueurs d'onde comprise entre l'ultraviolet et le bleu.

6. Système optique d'éclairage (100) selon l'une quelconque des revendications 2 à 5, **caractérisé en ce que** le phosphore est inclus dans le convertisseur de longueur d'onde (4) de telle sorte que le phosphore y soit réparti en fonction d'une distribution de luminance des rayons lumineux de régénération en termes d'une caractéristique quelconque parmi la densité de phosphore contenu dans le convertisseur de longueur d'onde (4) et l'épaisseur du convertisseur de longueur d'onde.
